# EUROPEAN PATENT APPLICATION

(11) **EP 4 715 357 A1**
(43) Date of publication of application: **25.03.2026**
(21) Application number: 24807233.2
(22) Date of filing: 15.05.2024
(51) Int. Cl.: G01M 3/00, B65D 8/04, G01B 21/30, G01M 3/04, G01M 3/10, G01M 3/20

(54) **INSPECTION METHOD AND MANUFACTURING METHOD FOR METALLIC PACKAGING CONTAINER, MANUFACTURING METHOD FOR PACKAGE BODY, PACKAGING CONTAINER ASSEMBLY, AND PACKAGE BODY ASSEMBLY**

(30) Priority: 17.05.2023 US 202363467154 P; 20.06.2023 JP 2023101113; 01.08.2023 JP 2023125614
(71) Applicant: Nissui Corporation, Tokyo 105-8676 (JP)
(72) Inventor: KONDO, Mitsuo, Yachiyo-shi, Chiba 276-0022 (JP); MISHINA, Kenji, Yachiyo-shi, Chiba 276-0022 (JP); YAMADA, Teru, Yachiyo-shi, Chiba 276-0022 (JP); TATEIWA, Hironori, Tsukuba-shi, Ibaraki 300-2611 (JP); HIRAYAMA, Shouji, Tsukuba-shi, Ibaraki 300-2611 (JP); MATSUSHIMA, Kazunori, Tsukuba-shi, Ibaraki 300-2611 (JP); TAKEUCHI, Kazuharu, Tokyo 105-8676 (JP); SHIMIZU, Kaori, Kamisu-shi, Ibaraki 314-0103 (JP); HINATAYA, Takahiro, Kamisu-shi, Ibaraki 314-0103 (JP)
(74) Representative: Mewburn Ellis LLP
(86) International application number: PCT/JP2024/017982
(87) International publication number: WO 2024/237282

(57) **Abstract**

To provide an inspection method and production method for a packaging container made of metal having a reduced risk of leakage of specific contents (in particular, a composition containing a highly unsaturated fatty acid alkyl ester as a main component).

The method of the present invention for inspecting and producing a packaging container made of metal includes forming and seam-welding a metal sheet to form a body, and attaching a top plate and a bottom plate to the body to form a packaging container; and thereafter performing a burr inspection to inspect a degree of burr of the seam portion of the body.

## Description

### FIELD

The present invention relates to an inspection method or production method for a packaging container made of metal, a production method of a package (note that "package" may also be called "packaged body"), a packaging container assembly, or a package assembly. The present invention also relates to the use of an indicator for adjusting a production method for a packaging container or a package.

### BACKGROUND

Conventionally, in the production management of packaging containers made of metal (for example, drums, etc.), a visual inspection of the seam portion immediately after welding of the body of the packaging container, an air-tightness inspection of packaging containers, etc., are performed as pre-shipment inspections.

For example, Patent Literature 1 discloses a method of housing a closed drum in an airtight chamber for inspecting the airtightness of the drum. More specifically, the method of Patent Literature 1 is directed to an airtightness inspection method for a closed drum, wherein the drum comprises a cylindrical body, a base plate which closes the lower end opening of the body by forming a lower chime, and a top plate which closes the upper end opening of the body by forming an upper chime, and the airtightness inspection method comprises an evacuation step of simultaneously evacuating the inside of the drum and the inside of a chamber to vacuum; a pressing step of pressing and holding the base plate and the top plate after the evacuation step; a high-pressure enclosing step of enclosing helium gas in the drum up to atmospheric pressure or higher after the pressing step; and a micro-leakage inspection step of inspecting for the presence or absence of leakage of the helium gas from the drum into the chamber after the high-pressure sealing step. According to the method of Patent Literature 1, an air-tightness inspection of a drum at a micro-leakage level can be performed with high accuracy.

### [CITATION LIST]

### [PATENT LITERATURE]

[PTL 1] Japanese Unexamined Patent Publication (Kokai) No. 2016-080438

### SUMMARY

### [TECHNICAL PROBLEM]

However, the present inventors have discovered a problem, that is, packaging containers may leak when containing specific contents, though they pass the helium leak test, which is an inspection method with particularly high detection sensitivity among air-tightness inspections. Examples of the specific contents include a composition containing a highly unsaturated fatty acid alkyl ester as a main component.

The present invention has been achieved in light of the above circumstances, and an object thereof is to provide an inspection method and production method for a packaging container made of metal having a reduced risk of leakage of specific contents. Examples of the specific contents as used herein include a composition containing a highly unsaturated fatty acid alkyl ester as a main component.

Another object of the present invention is to provide a production method for a package having a reduced risk of leakage of specific contents. Examples of the specific contents as used herein include a composition containing a highly unsaturated fatty acid alkyl ester as a main component.

Yet another object of the present invention is to provide a packaging container assembly and a package assembly having a reduced risk of leakage of specific contents. Examples of the specific contents as used herein include a composition containing a highly unsaturated fatty acid alkyl ester as a main component.

Yet another object of the present invention is to provide the use of an indicator for adjusting a production method for a packaging container for storing a composition containing a highly unsaturated fatty acid alkyl ester as a main component.

Yet another object of the present invention is to provide the use of an indicator for adjusting a production method for a package that stores a composition containing a highly unsaturated fatty acid alkyl ester as a main component.

### [SOLUTION TO PROBLEM]

The present invention, which achieves the above objects, is as described below.

### <Aspect 1>

An inspection method for a packaging container made of metal, the inspection method comprising:
forming and seam-welding a metal sheet to form a body, and then attaching a top plate and a bottom plate to the body to form a packaging container; and thereafter performing a burr inspection to inspect a degree of burr of the seam portion of the body.

### <Aspect 2>

The inspection method according to Aspect 1, wherein the degree of burr is based on a burr size.

### <Aspect 3>

The inspection method according to Aspect 1 or 2, wherein the burr inspection is visually performed.

### <Aspect 4>

The inspection method according to any one of Aspects 1 to 3, wherein the burr inspection is based on a limit sample.

### <Aspect 5>

A method for manufacturing a packaging container made of metal, the method comprising:
forming and seam-welding a metal sheet to form a body,
attaching a top plate and a bottom plate to the body to form a packaging container,
performing a burr inspection to inspect a degree of burr of the seam portion of the body of the packaging container, and
selecting the packaging container which has passed the burr inspection as a burr inspection-passed product.

### <Aspect 6>

The method according to Aspect 5, wherein the burr size of the burr inspection-passed product is 1.3 mm or less.

### <Aspect 7>

The method according to Aspect 5 or 6, comprising:
performing an air-tightness inspection with a gas on the packaging container,
selecting the packaging container which has passed the air-tightness inspection as an air-tightness inspection-passed product, and
performing the burr inspection on the air-tightness inspection-passed product.

### <Aspect 8>

The inspection method according to any one of Aspects 1 to 4 or the method according to any one of Aspects 5 to 7, wherein the packaging container is for storing a composition containing a highly unsaturated fatty acid alkyl ester as a main component.

### <Aspect 9>

A packaging container assembly, comprising:
100 or more packaging containers made of metal, wherein
a burr size of the seam portion of a body of each of 98% or more of the 100 or more packaging containers made of metal is 1.3 mm or less, and
the packaging containers are for storing a composition containing a highly unsaturated fatty acid alkyl ester as a main component.

### <Aspect 10>

The packaging container assembly according to Aspect 9, comprising:
200 or more of the packaging containers, wherein
the burr size of the seam portion of the body of each of 98% or more of the 200 or more packaging containers is 1.3 mm or less.

### <Aspect 11>

The packaging container assembly according to Aspect 9 or 10, wherein the packaging container assembly is composed of packaging containers that were manufactured consecutively.

### <Aspect 12>

A package assembly, comprising:
a packaging container assembly comprising 100 or more packaging containers made of metal, wherein
a burr size of the seam portion of a body of each of 98% or more of the 100 or more packaging containers is 1.3 mm or less, and
a composition containing a highly unsaturated fatty acid alkyl ester as a main component stored in each packaging container of the packaging container assembly.

### <Aspect 13>

The package assembly according to Aspect 12, comprising:
200 or more of the packaging containers, wherein
the burr size of the seam portion of the body of each of 98% or more of the 200 or more packaging containers is 1.3 mm or less.

### <Aspect 14>

The package assembly according to Aspect 12 or 13, wherein 98% or more of the packages constituting the package assembly are determined to be leak-free in a contents leakage inspection performed after two weeks or more have elapsed since storage of the composition.

### <Aspect 15>

The package assembly according to any one of Aspects 12 to 14, wherein the package assembly is composed of packages that were manufactured consecutively.

### <Aspect 16>

A method for manufacturing a package, comprising:
storing a composition containing a highly unsaturated fatty acid alkyl ester as a main component in the packaging container produced by the method according to any one of Aspects 5 to 8.

### <Aspect 17>

A method for manufacturing a package, comprising:
storing a composition containing a highly unsaturated fatty acid alkyl ester as a main component in the packaging container produced by the method according to any one of Aspects 5 to 8 to obtain a package for leakage inspection,
performing a leakage inspection of the package for leakage inspection after two weeks or more have elapsed since storage of the composition, and
selecting the package which has passed the leakage inspection as a leakage inspection-passed product.

### <Aspect 18>

A method for manufacturing a package, comprising:
forming and seam-welding a metal sheet to form a body,
attaching a top plate and a bottom plate to the body to form a packaging container,
storing a composition containing a highly unsaturated fatty acid alkyl ester as a main component in the packaging container to obtain a package for leakage inspection,
performing a leakage inspection of the package for leakage inspection after two weeks or more have elapsed since storage of the composition, and
selecting the package which has passed the leakage inspection as a leakage inspection-passed product.

### <Aspect 19>

A method for using an indicator for adjusting a method for manufacturing a packaging container for storing a composition containing a highly unsaturated fatty acid alkyl ester as a main component,
wherein the indicator comprises at least results of a burr inspection of the packaging container, and
wherein the burr inspection comprises inspecting a degree of burr of a seam portion of the body of the packaging container after attaching a top plate and a bottom plate to a body to form the packaging container.

### <Aspect 20>

A method for using an indicator for adjusting a method for manufacturing a package that stores a composition containing a highly unsaturated fatty acid alkyl ester as a main component,
wherein the indicator comprises at least results of a leakage inspection of the package, and
wherein the leakage inspection includes performing a leakage inspection of a package for leakage inspection after two weeks or more have elapsed since storage of the composition.

### <Aspect 21>

A pharmaceutical composition comprising, as an active ingredient, a composition containing a highly unsaturated fatty acid alkyl ester as a main component, the composition being contained in the package assembly according to any one of Aspects 12 to 15, or being contained in a package produced by the method according to any one of Aspects 16 to 18.

### <Aspect 22>

The pharmaceutical composition according to Aspect 21, which is an agent for the treatment or prevention of at least one disease selected from the group consisting of atherosclerosis, cerebral infarction, myocardial infarction, thrombosis, lifestyle-related diseases, allergy, inflammatory diseases, and cancer.

### [ADVANTAGEOUS EFFECTS OF INVENTION]

According to an aspect of the present invention, there can be provided an inspection method and a production method for a packaging container made of metal having a reduced risk of leakage of specific contents. Examples of the specific contents as used herein include a composition containing a highly unsaturated fatty acid alkyl ester as a main component.

According to an aspect of the present invention, there can be provided a production method for a package having a reduced risk of leakage of specific contents. Examples of the specific contents as used herein include a composition containing a highly unsaturated fatty acid alkyl ester as a main component.

According to an aspect of the present invention, there can be provided a packaging container assembly and a package assembly having a reduced risk of leakage of specific contents. Examples of the specific contents as used herein include a composition containing a highly unsaturated fatty acid alkyl ester as a main component.

According to an aspect of the present invention, there can be provided the use of an indicator for adjusting a production method for a packaging container for storing a composition containing a highly unsaturated fatty acid alkyl ester as a main component.

According to an aspect of the present invention, there can be provided the use of an indicator for adjusting a production method for a package that stores a composition containing a highly unsaturated fatty acid alkyl ester as a main component.

### BRIEF DESCRIPTION OF DRAWINGS

FIG. 1 is a process view showing an embodiment of the inspection method of the present invention.
FIG. 2 is a schematic diagram showing an embodiment of a packaging container formed in step S10.
FIG. 3 is a process view showing an embodiment of a production method for a packaging container of the present invention.
FIG. 4 is a process view showing another embodiment of the production method for a packaging container of the present invention.
FIG. 5 is a process view showing an embodiment of a second production method for a package of the present invention.
FIG. 6 is a process view showing an embodiment of a third production method for a package of the present invention.

### DESCRIPTION OF EMBODIMENTS

The modes for carrying out the present invention will be described in detail below with reference to the drawings. Note that for convenience of explanation, descriptions of duplicated portions in each embodiment have been omitted. Not all constituent elements of the embodiments are indispensable, and some constituent elements may be omitted. The modes shown below illustrate the present invention and are not intended to limit the present invention.

### <<Inspection Method for Packaging Container Made of Metal>>

The inspection method comprises:
forming and seam-welding a metal sheet to form a body, and then attaching a top plate and a bottom plate to the body to form a packaging container; and thereafter performing a burr inspection to inspect a degree of burr of the seam portion of the body.

In the inspection method of one embodiment of the present invention, especially by performing burr inspection on the packaging container made of metal, the risk of leakage can be reduced even when specific contents are stored. Herein, examples of the specific contents include a composition containing a highly unsaturated fatty acid alkyl ester as a main component.

In an aspect of the present invention, reducing the risk of leakage of the contents means that leakage is less likely to occur than in an aspect in which a burr inspection is not performed. This preferably means no leakage.

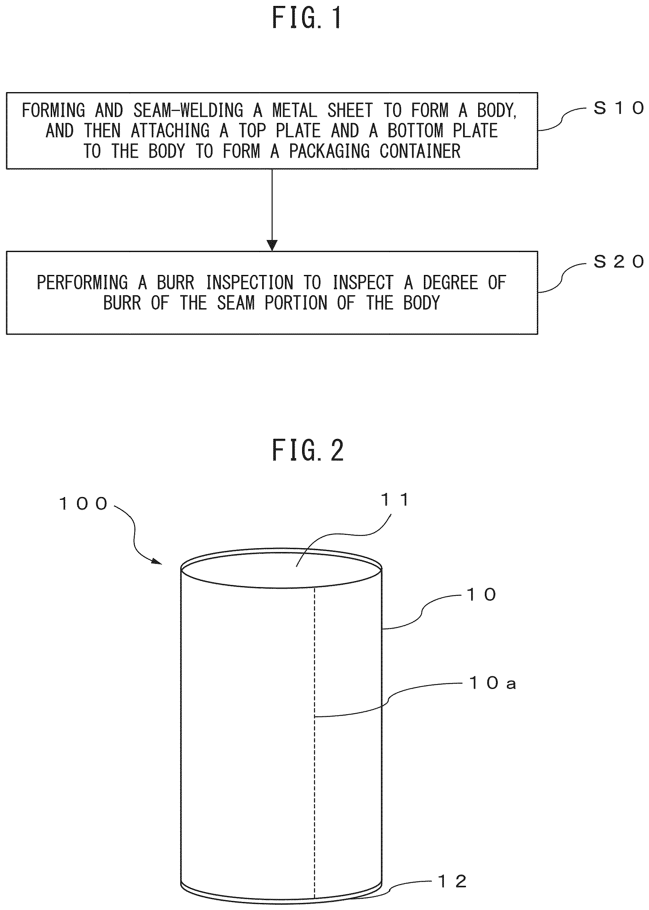

FIG. 1 is a process view showing an embodiment of the inspection method of the present invention. As shown in FIG. 1, the inspection method of the present invention comprises forming and seam-welding a metal sheet to form a body, and then attaching a top plate and a bottom plate to the body to form a packaging container (step S10); and thereafter performing a burr inspection to inspect the degree of burr of the seam portion of the body (step S20).

FIG. 2 is a schematic view showing an embodiment of a packaging container formed in step S10. As shown in FIG. 2, the packaging container 100 formed in step S10 is in a state in which the top plate 11 and the bottom plate 12 are attached to the body 10. Though not shown in FIG. 2, the packaging container 100 may further comprise rolling hoops attached to the body 10 and/or the outer surface of the packaging container 100 may be painted. In order to perform a burr inspection more easily, it is preferable that the outer surface of the packaging container 100 be painted.

Step S20 includes performing a burr inspection to inspect the degree of burr of the seam portion 10a of the body 10 of the packaging container 100.

In the present invention, "packaging container" refers to the container itself that can store contents, and preferably to an empty container that can be sealed after the contents are stored therein. For example, the packaging container may be an empty drum, specifically a tight-head drum. In the present invention, "packaging container made of metal" (hereinafter also simply referred to as the "packaging container") refers to a packaging container produced using metal as the main material. The metal as the main material of the packaging container of the present invention is not particularly limited, and examples include iron and aluminum. Among these, iron is preferably used as the main material metal. The packaging container of the present invention may be produced using only one type of metal, or may be produced using an alloy formed from two or more kinds of metals, or an alloy formed from one or more kinds of metals together with a non-metal. The packaging container of the present invention may be produced using an alloy such as steel or stainless steel, and is preferably produced using steel. As used herein, "metal sheet" refers to a plate-like member for forming the packaging container of the present invention, that is, a plate-like member whose main material is the above metal. In one aspect of the present invention, the packaging container made of metal may have, on its inner surface, a layer containing a metal phosphate salt; specific examples of the metal phosphate salt include iron phosphate and zinc phosphate. In another aspect of the present invention, the packaging container made of metal may have, on its inner surface, a resin layer; specific examples of the resin layer include an epoxy resin layer and a phenolic resin layer.

In an aspect of the present invention, the size of the packaging container is not particularly limited, and the capacity of the portion for accommodating the content(s) may be 10 L or more, 20 L or more, 40 L or more, 60 L or more, 80 L or more, 100 L or more, 150 L or more, 200 L or more, or 300 L or more, and may be 450 L or less, 400 L or less, 350 L or less, 300 L or less, 250 L or less, or 200 L or less. The shape of the packaging container of the present invention is not particularly limited, and may be, for example, cylindrical.

From the viewpoint of further exhibiting the advantages of the present invention, in an aspect of the present invention, the packaging container is preferably for storing a composition containing a highly unsaturated fatty acid alkyl ester as a main component.

In the present invention, "package" (note that "package" may also be called "packaged body") refers to a packaging container in which contents are stored. For example, the package may be a drum storing the contents. In one aspect of the present invention, the contents may be a composition containing a highly unsaturated fatty acid alkyl ester as a main component.

In an aspect of the present invention, "highly unsaturated fatty acid" means a fatty acid having 3 or more double bonds (unsaturated bonds), and in particular, a fatty acid having 18 or more carbon atoms and 3 or more double bonds. Furthermore, the highly unsaturated fatty acid can be, for example, a fatty acid having 20 or more carbon atoms and 3 or more or 4 or more double bonds, or a fatty acid having 20 or more carbon atoms and 5 or more double bonds. For example, the number of carbon atoms of the highly unsaturated fatty acid may be 15 or more, 16 or more, 17 or more, 18 or more, 19 or more, or 20 or more, and may be 30 or less, 28 or less, 26 or less, 24 or less, or 22 or less. For example, the number of double bonds in the highly unsaturated fatty acid may be 3 or more, 4 or more, or 5 or more, and may be 8 or less, 7 or less, or 6 or less.

Examples of specific highly unsaturated fatty acids include α-linolenic acid (18:3 n-3), γ-linolenic acid (18:3 n-6), dihomo-γ-linolenic acid (20:3 n-6), arachidonic acid (20:4 n-6), eicosapentaenoic acid (20:5 n-3; hereinafter also abbreviated as "EPA"), docosapentaenoic acid (22:5 n-6), and docosahexaenoic acid (22:6 n-3; hereinafter also abbreviated as "DHA").

In the present invention, the "highly unsaturated fatty acid alkyl ester" is not particularly limited and includes, and examples thereof include C₁₋₆ alkyl esters of the above highly unsaturated fatty acids. Specifically, it may be an ethyl ester. Thus, in the present invention, specific examples of the "highly unsaturated fatty acid alkyl ester" include eicosapentaenoic acid ethyl ester (hereinafter also abbreviated as "EPA-E") and omega-3-acid ethyl esters. The omega-3-acid ethyl esters as used herein is a highly unsaturated fatty acid ethyl ester containing EPA-E and docosahexaenoic acid ethyl ester (hereinafter also abbreviated as "DHA-E") as main components.

In an aspect of the present invention, a "composition containing a highly unsaturated fatty acid alkyl ester as a main component" may have one highly unsaturated fatty acid alkyl ester as a main component, or a mixture of two or more highly unsaturated fatty acid alkyl esters as a main component. In an aspect of the present invention, the composition means a composition in which the sum of highly unsaturated fatty acids in the constituent fatty acids of the composition is 50 area% or more, 60 area% or more, 70 area% or more, 80 area% or more, 84 area% or more, 90 area% or more, 95 area% or more, or 96.5 area% or more. For example, the composition may be a composition containing EPA-E as a main component, or a composition containing omega-3-acid ethyl esters as a main component. Here, in the composition containing EPA-E as a main component, the ratio of EPA in the constituent fatty acids may be 50 area% or more, 60 area% or more, 70 area% or more, 80 area% or more, 84 area% or more, 90 area% or more, 95 area% or more, or 96.5 area% or more, and is preferably 96.5 area% or more. In the composition containing omega-3-acid ethyl esters as a main component, the total ratio of EPA and DHA in the constituent fatty acids may be 50 area% or more, 60 area% or more, 70 area% or more, 80 area% or more, 84 area% or more, 90 area% or more, 95 area% or more, or 96.5 area% or more, and is preferably 84 area% or more. As used herein, "area%" is a value calculated based on the gas chromatography analysis conditions and analysis method described in WO 2020/122167. In the field of oil chemistry, "area%" is used substantially synonymously with "wt%."

In one aspect of the present invention, a "composition containing a highly unsaturated fatty acid alkyl ester as a main component" means a composition in which the total proportion of highly unsaturated fatty acid alkyl esters in the composition is 50 wt% or more, 60 wt% or more, 70 wt% or more, 80 wt% or more, 84 wt% or more, 90 wt% or more, 95 wt% or more, or 96.5 wt% or more. For example, the composition may be a composition containing EPA-E as a main component, or a composition containing omega-3-acid ethyl esters as a main component. Here, in a composition containing EPA-E as a main component, the proportion of EPA in the composition may be 50 wt% or more, 60 wt% or more, 70 wt% or more, 80 wt% or more, 84 wt% or more, 90 wt% or more, 95 wt% or more, or 96.5 wt% or more, and is preferably 96.5 wt% or more. In a composition containing omega-3-acid ethyl esters as a main component, the total proportion of EPA and DHA in the composition may be 50 wt% or more, 60 wt% or more, 70 wt% or more, 80 wt% or more, 84 wt% or more, 90 wt% or more, 95 wt% or more, or 96.5 wt% or more, and is preferably 84 wt% or more.

In an aspect of the present invention, "burr" refers to variations in the shape of the edge of the outer a metal sheet of the packaging container body seam portion (for example, the seam portion 10a shown in FIG. 2). More specifically, in an aspect, "burr" refers to a variation in shape in which an end portion has irregularities in a direction perpendicular to the weld line and/or in the circumferential direction of the packaging container.

In an aspect of the present invention, "burr inspection" refers to inspection of the degree of burr of the seam portion of the body of the packaging container. The degree of burr may be based on burr size. "Burr size" refers to the sum of the distance of the highest peak from the mean line and the distance of the lowest valley from the mean line, obtained by straight line from the shape of the edge of the outer a metal sheet of the seam portion. In the present invention, the "burr size" can be determined by a method in accordance with the maximum height Ry in surface roughness (JIS B0601:1994, JIS B0031:1994).

JIS B0051:2004 defines "burr size", but the burr described therein is a burr generated by a machining or molding process. Specifically, the shape of the "burr" in the present invention is different from the shape of the "burr" in JIS B0051:2004, and thus, naturally, the "burr size" according to the present invention is different from the "burr size" defined in JIS B0051:2004.

In an aspect of the present invention, the burr inspection may be performed by visual inspection. In another aspect of the present invention, the burr inspection may be performed using a shape-measuring instrument (e.g., a profilometer).

The burr inspection may also be based on a limit sample. The limit sample can be created, for example, by cutting out the seam portion of a packaging container that has burr(s). In one aspect of the present invention, the burr size of the limit sample is 1.3 mm. In the present invention, a packaging container having a burr size smaller than that of the limit sample can be selected.

### <<Method for Manufacturing Packaging Container Made of Metal>>

The method for manufacturing a packaging container made of metal (hereinafter also simply referred to as "the production method for a packaging container") according to one aspect of the present invention comprises:
forming and seam-welding a metal sheet to form a body;
attaching a top plate and a bottom plate to the body to form a packaging container;
performing a burr inspection to inspect a degree of burr of the seam portion of the body of the packaging container; and
selecting the packaging container which has passed the burr inspection as a burr inspection-passed product.

In the production method for a packaging container of one aspect of the present invention, in particular, by performing a burr inspection and selecting a burr inspection-passed product, the risk of leakage can be reduced even when the packaging container stores specific contents. Examples of the specific contents include, for example, a composition containing a highly unsaturated fatty acid alkyl ester as a main component.

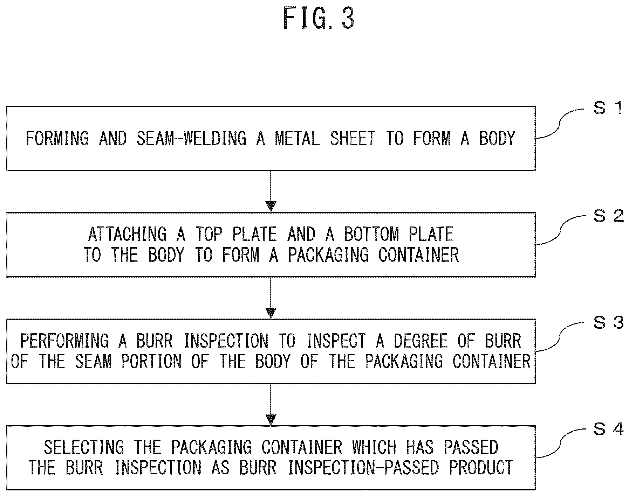

FIG. 3 is a process view showing an embodiment of the production method for a packaging container of the present invention. As shown in FIG. 3, the production method for a packaging container according to one aspect of the present invention may comprise forming and seam-welding a metal sheet to form a body (step S1); attaching a top plate and a bottom plate to the body to form a packaging container (step S2); performing a burr inspection to inspect a degree of burr of the seam portion of the body of the packaging container (step S3); and selecting the packaging container which has passed the burr inspection as a burr inspection-passed product (step S4).

In step S1, the forming of the metal sheet is not particularly limited, and can be performed, for example, by pressing in accordance with the shape and volume of the intended packaging container. The seam-welding is also not particularly limited and can be performed by well-known seam welding. Although not indispensable, it is preferable to flatten the seam by pressing after the body is formed.

In step S2, attaching the top plate and the bottom plate to the body can be performed, for example, using a sealant or the like. Although not indispensable, it is preferable to roll-seam (curl and seam) the rim after attaching the top plate and the bottom plate to the body. The rolled rim is referred to as a seamed edge (also referred to as a chime). The shape of the chime is not particularly limited and may be, for example, a triple seam, and more specifically, a round triple seam.

Since the description of the "inspection method for a packaging container made of metal" above can be appropriately referenced, the description of the burr inspection in step S3 is omitted here.

In step S4, the selection of a burr inspection-passed product can be based, for example, on the above-described burr size. The specific value of the burr size of a burr inspection-passed product is not particularly limited and may be, for example, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, or 0.0 mm (substantially no burr).

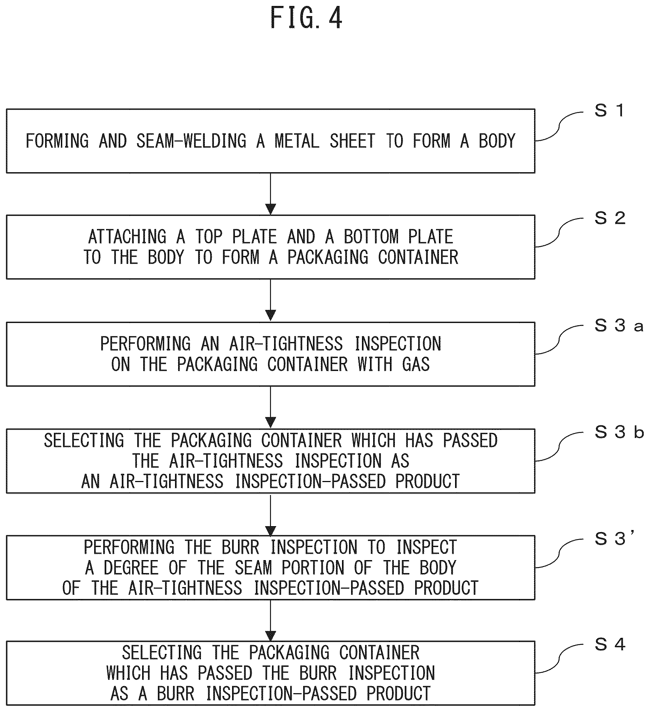

The production method for a packaging container of the present invention may further optionally comprise other steps in addition to steps S1 to S4 described above. Examples of other steps include a step of subjecting the packaging container to an airtightness inspection using a gas (step S3a) and a step of selecting a packaging container which has passed the airtightness inspection as an airtightness inspection-passed product (step S3b). These will be described more specifically with reference to FIG. 4.

FIG. 4 is a process view showing another embodiment of the production method for a packaging container of the present invention. As shown in FIG. 4, the production method for a packaging container according to another aspect of the present invention may comprise forming and seam-welding a metal sheet to form a body (step S1); attaching a top plate and a bottom plate to the body to form a packaging container (step S2); performing, on the packaging container, an airtightness inspection with a gas (step S3a); selecting the packaging container which has passed the airtightness inspection as an airtightness inspection-passed product (step S3b); performing a burr inspection to inspect a degree of burr of the seam portion of the body of the airtightness inspection-passed product (step S3'); and selecting the packaging container which has passed the burr inspection as a burr inspection-passed product (step S4).

In step S3a, the airtightness inspection may be performed by an air test or by a helium leak test. A helium leak test is preferable because it enables higher detection sensitivity than an air test.

The air test can be performed by, for example, filling the packaging container with a compressed gas (e.g., compressed air), submerging the packaging container in water for a predetermined time (for example, 2 minutes or more and 10 minutes or less, or 3 minutes or more and 5 minutes or less), and determining whether bubbles are generated.

A helium leak test can be performed by, for example, injecting helium gas into the packaging container and then reducing the pressure outside the packaging container in a vacuum chamber to determine whether there is any leakage of helium gas.

The airtightness inspection-passed product in step S3b refers to a packaging container which has undergone an airtightness inspection and in which no leakage was detected.

### <<Packaging container assembly >>

A packaging container assembly according to one aspect of the present invention comprises:
100 or more packaging containers made of metal, wherein
   for 98% or more of the 100 or more packaging containers made of metal, the burr size of the seam portion of the body is 1.3 mm or less, and
the packaging containers are for storing a composition containing a highly unsaturated fatty acid alkyl ester as a main component.

By using the packaging container assembly according to one aspect of the present invention, the risk of leakage can be reduced even when storing a composition containing a highly unsaturated fatty acid alkyl ester as a main component.

More specifically, the packaging container assembly according to one aspect of the present invention may contain 100 or more, 120 or more, 150 or more, 180 or more, or 200 or more packaging containers. The upper limit of the number of packaging containers included in the assembly is not particularly limited and may be, for example, 5,000 or fewer, 1,000 or fewer, 500 or fewer, or 300 or fewer. Furthermore, for 98% or more, 99% or more, 99.5% or more, or 100% of the packaging containers included in the assembly, the burr size of the seam portion of the body is 1.3 mm or less. More specifically, the burr size may be, for example, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, or 0.0 mm (substantially no burr).

In one aspect of the present invention, the packaging container assembly is an assembly composed of packaging containers that were manufactured consecutively. Here, with respect to the packaging containers, "manufactured consecutively" means that, during the manufacture of the packaging containers pertaining to the packaging container assembly, all of the packaging containers are selected as burr inspection-passed products and no product that fails the burr inspection is selected.

### <<Package Assembly >>

The package assembly of an aspect of the present invention comprises:
a packaging container assembly comprising 100 or more packaging containers made of metal, a burr size of the seam portion of a body of each of 98% or more of the 100 or more packaging containers being 1.3 mm or less, and
a composition containing a highly unsaturated fatty acid alkyl ester as a main component stored in each packaging container of the packaging container assembly.

According to the package assembly of an aspect of the present invention, it is possible to reduce the risk of leakage of the contained composition, i.e., the composition containing a highly unsaturated fatty acid alkyl ester as a main component.

More specifically, the package assembly of an aspect of the invention may comprise 100 or more, 120 or more, 150 or more, 180 or more, or 200 or more packaging containers of the present invention. The upper limit of the packaging containers of the present invention included in the package assembly of the present invention is not particularly limited, and may be, for example, 5000 or less, 1000 or less, 500 or less, or 300 or less. Furthermore, the burr size of the seam portion of the body of each of 98% or more, 99% or more, 99.5% or more, or 100% of the packaging containers of the present invention contained in the package assembly of the present invention may be 1.3 mm or less. More specifically, the burr size of the seam portion of the body of each of the packaging containers of the present invention included in the package assembly of the present invention may be, for example, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, or 0.0 mm (substantially free of burr).

In one aspect of the present invention, 98% or more of the packages constituting the package assembly can be determined to be leak-free in a contents leakage inspection performed after two weeks or more have elapsed since storage of the composition. More specifically, for example, 98% or more, 99% or more, 99.5% or more, or 100% of the packages constituting the package assembly can be determined to be leak-free in a contents leakage inspection performed after two weeks or more have elapsed since storage of the composition. In this manner, if "no leakage of contents" is determined after two weeks or more, it is preferable because the package assembly can be handled without leakage from production of the assembly through shipment, and further until the packages are put into use. The period from storage of the composition to the contents leakage inspection may be, for example, 2 weeks or more, 4 weeks or more, 8 weeks or more, 10 weeks or more, 12 weeks or more, or 16 weeks or more, and may be 30 weeks or less, 25 weeks or less, 20 weeks or less, 18 weeks or less, 16 weeks or less, 12 weeks or less, 10 weeks or less, 8 weeks or less, 4 weeks or less, or 2 weeks or less. The contents leakage inspection may be performed before shipment of the package assembly. The period from the leakage inspection to shipment may be, for example, 4 weeks or less, 2 weeks or less, or 1 week or less. The number of times the contents leakage inspection is performed is not particularly limited and may be, for example, once, twice, three times, or four times. The number may be 1 or more, 2 or more, or 3 or more and/or 4 or less or 3 or less.

Note that in an aspect of the present invention, the method of the contents leakage inspection is not particularly limited, and, for example, may be appropriately performed visually based on the properties of the contents. For example, when the package contains a composition comprising a highly unsaturated fatty acid alkyl ester such as EPA-E as a main component, the leaked highly unsaturated fatty acid alkyl ester such as EPA-E is oxidized and turns yellow; therefore, when yellow discoloration is observed, it can be judged that the contents have leaked, and when no yellow discoloration is observed, it can be determined that the contents have not leaked.

A package assembly according to one aspect of the present invention is a package assembly composed of packages that are manufactured consecutively. Here, the term "manufactured consecutively" with respect to the packages means that, during the production of the packages constituting the package assembly, all of the packages are selected as burr inspection-passed products and/or leakage inspection-passed products, and no nonconforming products are selected in the burr inspection and/or the leakage inspection.

### <<Method for Manufacturing Package>>

An aspect of the present invention can provide a method for manufacturing a package in which a composition containing a highly unsaturated fatty acid alkyl ester as a main component is stored in a packaging container. The production method for a package of this aspect may be any of the first to third production methods illustrated below. The package of the present invention produced by any of these production methods can reduce the risk of leakage of the composition containing a highly unsaturated fatty acid alkyl ester as a main component contained as contents.

A first aspect of the method for manufacturing a package comprises:
storing a composition containing a highly unsaturated fatty acid alkyl ester as a main component in the packaging container produced by the production method for a packaging container of an aspect of the present invention described above.

A second aspect of the method for manufacturing a package comprises:
storing a composition containing a highly unsaturated fatty acid alkyl ester as a main component in the packaging container produced by the production method for a packaging container of an aspect of the present invention described above to obtain a package for leakage inspection,
performing a leakage inspection of the package for leakage inspection after two weeks or more have elapsed since storage of the composition, and
selecting the package which has passed the leakage inspection as a leakage inspection-passed product.

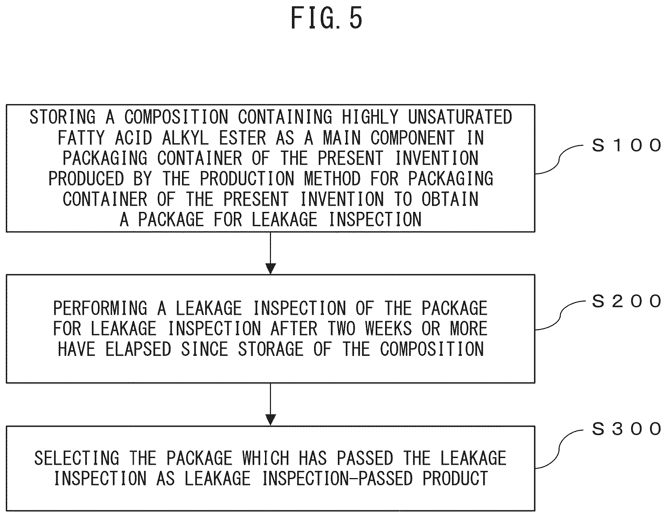

FIG. 5 is a process view showing an embodiment of the second production method for a package of the present invention. As shown in FIG. 5, the second method may comprise storing a composition containing a highly unsaturated fatty acid alkyl ester as a main component in the packaging container produced by the production method for a packaging container of an aspect of the present invention described above to obtain a package for leakage inspection (step S100), performing a leakage inspection of the package for leakage inspection after two weeks or more have elapsed since storage of the composition (step S200), and selecting the package which has passed the leakage inspection as a leakage inspection-passed product (step S300).

In step S200, the period from storage of the composition containing a highly unsaturated fatty acid alkyl ester as a main component to the contents leakage inspection may be, for example, 2 weeks or more, 4 weeks or more, 8 weeks or more, 10 weeks or more, 12 weeks or more, or 16 weeks or more, and may be 30 weeks or less, 25 weeks or less, 20 weeks or less, 18 weeks or less, 16 weeks or less, 12 weeks or less, 10 weeks or less, 8 weeks or less, 4 weeks or less, or 2 weeks or less.

In step S300, "leakage inspection-passed product" refers to a package which has undergone leakage inspection and has no leakage of the contents.

A third method for manufacturing a package of the present invention comprises:
forming and seam-welding a metal sheet to form a body,
attaching a top plate and a bottom plate to the body to form a packaging container,
storing a composition containing a highly unsaturated fatty acid alkyl ester as a main component in the packaging container to obtain a package for leakage inspection,
performing a leakage inspection of the package for leakage inspection after two weeks or more have elapsed since storage of the composition, and
selecting the package which has passed the leakage inspection as a leakage inspection-passed product.

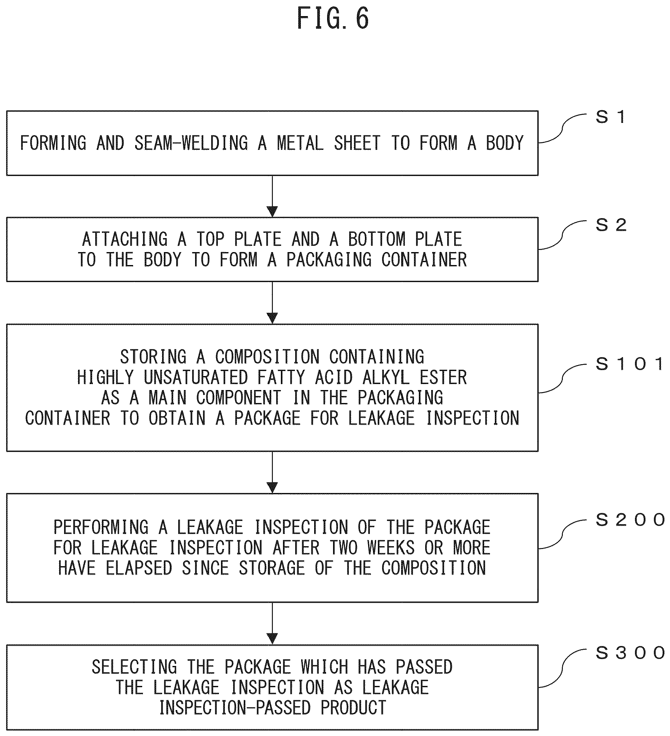

FIG. 6 is a process view showing an embodiment of the third production method for a package of the present invention. As shown in FIG. 6, the third method may comprise forming and seam-welding a metal sheet to form a body (step S1), attaching a top plate and a bottom plate to the body to form a packaging container (step S2), storing a composition containing a highly unsaturated fatty acid alkyl ester as a main component in the packaging container to obtain a package for leakage inspection (step S101), performing a leakage inspection of the package for leakage inspection after two weeks or more have elapsed since storage of the composition (step S200), and selecting the package the leakage inspection as a leakage inspection-passed product (step S300).

### <<Method for Using Indicator for Adjusting Production Method for Packaging Container>>

An aspect of the present invention can provide a method for using indicator for adjusting the production method for a packaging container.

The use of an indicator for adjusting a production method for a packaging container according to an aspect of the present invention is directed to:
the use of an indicator for adjusting a production method for a packaging container for storing a composition containing a highly unsaturated fatty acid alkyl ester as a main component, wherein
the indicator comprises at least a result of a burr inspection of the packaging container, and
the burr inspection comprises performing an inspection of a degree of burr of the seam portion of a body of the packaging container after a top plate and a bottom plate are attached to the body to form the packaging container.

The indicator of an aspect of the present invention may further comprise welding conditions of the packaging container and/or the result of an air-tightness inspection of the packaging container.

In an aspect of the present invention, regarding the burr inspection, the above description can be referenced. In an aspect of the present invention, the result(s) of the burr inspection may be the result(s) of the burr inspection referenced in the above description. In an aspect of the present invention, the result(s) of the burr inspection may refer to the above description of the burr-inspection-passed product.

### <<Method for Using Indicator for Adjusting Production Method for Package>>

Another aspect of the present invention can provide a method for using an indicator for adjusting the production method for a package.

A method according to an aspect of the present invention for using an indicator for adjusting a production method for a package is
a method for using an indicator for adjusting a production method for a package that stores a composition containing a highly unsaturated fatty acid alkyl ester as a main component,
wherein the indicator comprises at least results of a leakage inspection of the package, and
wherein the leakage inspection comprises performing a leakage inspection of the package for leakage inspection after two weeks or more have elapsed since storage of the composition.

The indicator of another aspect of the present invention may further comprise at least one item selected from the group consisting of welding conditions for the packaging container, results of a burr inspection of the packaging container, and results of an air-tightness inspection of the packaging container

In another aspect of the present invention, regarding the leakage inspection, the above description can be referenced. In an aspect of the present invention, the results of the leakage inspection may be the results of the leakage inspection referenced in the above description. In an aspect of the present invention, the results of the leakage inspection may refer to the above description of the leakage inspection-passed product.

### <<Applications>>

In an aspect of the present invention, the applications of a composition containing a highly unsaturated fatty acid alkyl ester as a main component, the composition being contained in the above-described package assembly and/or in a package produced by the above-described production method, are not particularly limited; for example, the composition can be used as an oral preparation. Typically, the composition can be formulated as an oral preparation such as granules, tablets, capsules, or a liquid preparation. Uses of the composition of the present invention include, for example, foods and beverages (health foods, nutritional supplements, foods for specified health uses, supplements, dairy products, soft drinks, foods for pets, and livestock feed), pharmaceuticals, and quasi-drugs, and it is particularly preferable that the composition is a supplement or a pharmaceutical. In addition to use as a food material or a food, the composition may be used as an additive component for animal feed. Accordingly, in an aspect of the present invention, the composition containing a highly unsaturated fatty acid alkyl ester as a main component can be used as a material or active ingredient for these foods and beverages, pharmaceuticals, and quasi-drugs, and can be preferably used in their manufacture.

### <<Pharmaceutical Composition>>

In an aspect of the present invention, there is provided a pharmaceutical composition comprising, as an active ingredient, a composition containing a highly unsaturated fatty acid alkyl ester as a main component, the composition being contained in the above-described package assembly and/or contained in a package produced by the above-described production method. The content of the composition containing a highly unsaturated fatty acid alkyl ester as a main component in the pharmaceutical composition is not particularly limited, but is preferably 25% by weight to 99% by weight, more preferably 50% by weight to 95% by weight.

The pharmaceutical composition can be used for the treatment or prevention of diseases such as atherosclerosis, cerebral infarction, myocardial infarction, thrombosis, lifestyle-related diseases such as hyperlipidemia, allergy, inflammatory diseases, and cancer, and can be used, for example, as a therapeutic agent for obliterative arteriosclerosis or a therapeutic agent for hyperlipidemia.

In an aspect of the present invention, the pharmaceutical composition may contain, in addition to the active ingredient, pharmaceutically acceptable additive components. Such a pharmaceutical composition may contain pharmaceutically acceptable excipients. The pharmaceutical composition may suitably further contain known additives such as antioxidants, coating agents, gelling agents, taste-masking agents, flavoring agents, preservatives, emulsifiers, pH adjusters, buffers, and colorants. As the antioxidant, it is desirable to contain, in an effective amount, at least one selected from the group consisting of butylated hydroxytoluene, butylated hydroxyanisole, propyl gallate, gallic acid, quinones acceptable for use as pharmaceuticals, ascorbyl palmitate and other ascorbic acid esters, and tocopherols.

The dosage form of the preparation varies depending on the mode of co-administration of active ingredients and is not particularly limited, but an oral preparation is preferable; for example, tablets, film-coated tablets, capsules, microcapsules, granules, fine granules, powders, oral liquid preparations, syrups, jellies, and inhalation preparations can be used. Among these, oral administration in the form of capsules, for example by enclosing the composition in soft capsules or microcapsules, is preferable. The composition may also be orally administered as an enteric preparation or a sustained-release preparation, and for dialysis patients or patients with dysphagia, oral administration as a jelly preparation is also preferable. The pharmaceutical composition of the present invention can be produced or formulated according to conventional methods.

In one embodiment of the present invention, there is provided a method for prevention, treatment, or remission of a disease, the method comprising administering the pharmaceutical composition to a subject who suffers from, or is at risk of suffering from, at least one disease selected from the group consisting of atherosclerosis, cerebral infarction, myocardial infarction, thrombosis, lifestyle-related diseases, allergy, inflammatory diseases, and cancer. The administration route may be oral administration or topical administration. The dose may be any amount effective for treatment or prevention, and is appropriately set depending on conditions such as the kind of target disease, the severity of symptoms, and the age, body weight, and health condition of the subject. For example, for an adult, the pharmaceutical composition may be administered orally or parenterally at a dose of 100 mg to 10 g/day, preferably 1 g to 6 g/day, more preferably 1.8 g, 2 g, 2.1 g, 2.4 g, 2.7 g, 3 g, or 4 g/day, once per day, two to three times per day, or divided into more doses at appropriate intervals.

In this specification, a "therapeutic agent" refers to a pharmaceutical composition used to suppress or alleviate the progression of symptoms when symptoms caused by the target disease are observed. On the other hand, a "prophylactic agent" refers to a pharmaceutical composition used to suppress the onset of symptoms by administering the composition in advance when the onset of symptoms caused by the target disease is anticipated. However, these terms may be used in combination depending on the time of use or the symptoms at the time of use, and are not construed in a limiting manner.

### EXAMPLES

The present invention will be described in further detail below by way of the Examples, but the present invention is not limited thereto.

### <Method for Preparing a Composition Containing EPA-E as a Main Component>

Fish oil was ethyl-esterified by a conventional method to prepare fish oil ethyl esters in which EPA-E in the fatty acid ethyl esters is 16 area% or more. The fish oil ethyl esters were subjected to continuous rectification using a multistage rectification apparatus under conditions of a top pressure of 26.7 Pa or less and a distillation temperature of 190°C or less, and were fractionated into an initial fraction, a main fraction, and a residual fraction to obtain the main fraction. Here, the initial fraction is a fraction having higher volatility than the main fraction and mainly composed of ethyl esters of fatty acids having fewer than 20 carbon atoms. The main fraction is mainly composed of ethyl esters of C₂₀ fatty acids, and EPA-E in the fatty acid ethyl esters is 70 area% or more. The residual fraction is a fraction having lower volatility than the main fraction and mainly composed of ethyl esters of fatty acids having 21 or more carbon atoms.

The obtained main fraction was purified by HPLC using octadecylated silica gel as a packing material and methanol as a mobile phase to prepare a composition containing EPA-E as a main component, in which the proportion of EPA among the constituent fatty acids is 96.5 area% or more (hereinafter also referred to as the "EPA-E composition").

The EPA-E composition can be prepared with reference to methods described in, for example, Japanese Patent Application Laid-Open Nos. H04-041457, H04-128250, and H05-222392.

### <Method for Preparing a Glyceride Composition Containing DHA Triglyceride as a Main Component>

Fish oil was subjected, by a conventional method, to deacidification, enzymatic treatment, decolorization, and deodorization to prepare a glyceride composition containing DHA triglyceride as a main component (hereinafter also referred to as the "glyceride composition"). The glyceride composition contains 73 to 78% by weight of triglycerides and 22 to 26% by weight of diglycerides. In the constituent fatty acids of the composition, the proportion of DHA is 55 area% or more and the proportion of EPA is 5 area% or more.

As the method of the enzymatic treatment in the preparation of the glyceride composition, reference can be made to methods described in, for example, JP 2013-55893 and WO 2011/149040.

### <<Production Example 1>>

A steel metal sheet (plate thickness 1.2 mm) was rolled into a cylindrical shape and seam-welded to form the body of a drum. In addition, a steel metal sheet was punched and subjected to machining such as bung fitting attachment to produce a top plate and a bottom plate. The body, top plate, and bottom plate were degreased and subjected to zinc phosphate conversion coating. The treated top and bottom plates were fitted into the treated body and seamed (rolled seamed) to form a drum having triple seams at the seamed portions. The seamed portions are also referred to as chimes, and in this Production Example the chimes are triple-seam round seams.

The external surfaces of the formed drums were coated with a resin-based paint to a film thickness of 10 µm by airless gun coating. A helium leak test was performed on the drums after the external surface coating, and empty 200 L drums were produced as air-tightness inspection-passed products.

A helium leak test was performed using the following leakage inspection device. More specifically, after injecting helium gas into the inside of the drum, leakage of helium gas from defective portions was detected by reducing the pressure (evacuating) the outside of the drum in a vacuum chamber of the leakage inspection device. At this time, drums for which no helium gas leakage was detected were selected as air-tightness inspection-passed products. Here, the leakage inspection device was used with the settings described in the instruction manual certified by Yamaha Fine Technologies Co., Ltd., achieving a detection capability of a minimum diameter of φ30 µm.

### (Leakage Inspection Device for Helium Leak Test)

Yamaha Fine Technologies Co., Ltd., Product name: drum leak tester
Detection ability: minimum φ30 µm
Helium leak testing has 100- to 1000-fold the detection capability of a conventional air test.

Drums which were air-tightness inspection-passed products were filled with 180 kg of the EPA-E composition, nitrogen was introduced, and the drums were hermetically sealed to produce drums filled with the EPA-E composition according to Production Example 1. The proportion of EPA among the constituent fatty acids of the EPA-E composition is 96.5 area% or more. It was confirmed that there was no leakage of the EPA-E composition immediately after filling.

### <<Production Example 2>>

The outer surface of a drum formed in the same manner as in Production Example 1 above was coated. A helium leak test was then performed, and empty 200 L drums were selected as air-tightness inspection-passed products. Thereafter, the seams of the bodies of the selected drums were subjected to a burr inspection using a limit sample, and, as a result, empty 200 L drums as burr inspection-passed products were produced. The drums were filled with 180 kg of the EPA-E composition, nitrogen was introduced, and the drums were hermetically sealed to produce drums filled with the EPA-E composition according to Production Example 2. The proportion of EPA among the constituent fatty acids of the EPA-E composition is 96.5 area% or more. It was confirmed that there was no leakage of the EPA-E composition immediately after filling.

### <<Comparative Example 1>>

In the same manner as in Production Example 1 above, empty 200 L drums as air-tightness inspection-passed products were produced. Into the drums, without performing a burr inspection, 180 kg of a glyceride composition containing DHA triglyceride as a main component (hereinafter also referred to as the "glyceride composition") was filled; nitrogen was introduced, and the drums were hermetically sealed to produce drums filled with the glyceride composition according to Comparative Example 1. The glyceride composition contains 73 to 78% by weight of triglycerides and 22 to 26% by weight of diglycerides. In the constituent fatty acids of the composition, the proportion of DHA is 55 area% or more, and the proportion of EPA is 5 area% or more. It was confirmed that there was no leakage of the glyceride composition immediately after filling.

### <<Evaluation>>

Drums filled with the EPA-E composition or the glyceride composition prepared in Production Examples 1 and 2 were allowed to stand at 15 to 30°C for 4 to 6 months. Thereafter, the presence or absence of leakage of the EPA-E composition or the glyceride composition was confirmed. The results are shown in Table 1.

The presence or absence of leakage of the EPA-E composition or the glyceride composition was visually inspected at the seam-welded portion of the body and/or the seamed portion of the top plate or the seamed portion of the bottom plate of the drum, and leakage was determined to have occurred when yellow discoloration was observed due to oxidized EPA-E or DHA triglyceride.

**[Table 1]**

| (Table 1) | Burr inspection | Drums filled with EPA-E composition or glyceride composition | Drums in which the EPA-E composition or glyceride composition leaked |
|---|---|---|---|
| Production Example 1 | Not conducted | 150 drums | 4 drums |
| Production Example 2 | Conducted | 150 drums | 0 drums |
| Comparative Example 1 | Not conducted | 150 drums | 0 drums |

As is clear from the results of Table 1, for the drums according to Production Example 1, 4 out of 150 drums leaked the EPA-E composition. In contrast, for the drums according to Production Example 2, there was no leakage of the EPA-E composition among the 150 drums. Furthermore, for the drums according to Comparative Example 1, there was no leakage of the glyceride composition among the 150 drums.

### <<Reference Example>>

### <Investigation of Leaked Drums>

Regarding the drums of Production Example 1, EPA-E composition was extracted from three of the drums which leaked EPA-E composition, and the inner surfaces thereof were washed with an alkaline detergent and dried. A burr inspection, a helium leak test, and a PT inspection (penetrant test) were performed on the drums. The PT inspection was performed as follows.

### (PT Inspection (Penetrant Test))

After washing the insides and outsides of the drums with a cleaning agent (Color Check FR-Q, manufactured by TASETO) and applying a red penetrating liquid (Color Check FP-S, manufactured by TASETO) to the interiors thereof, compressed air (30 kpa) was sealed in the drums, which were allowed to stand for 24 hours with the leak points facing downward. Thereafter, the insides and outsides of the drums were washed with detergent, and the leaking portions on the outside were developed by applying a developing solution (Color Check FD-S, manufactured by TASETO). The drums were dismantled and the seam-welded portions were examined for coloration.

Regarding the drums according to Production Example 1, the same investigation was conducted for two of the drums from which EPA-E composition did not leak. The results are shown together in Table 2.

**[Table 2]**

| (Table 2) | Drums in which leakage was confirmed by helium leak test | Drums examined for coloration by PT inspection | Drums in which burrs were present |
|---|---|---|---|
| Drums in which leakage of the EPA-E composition occurred | 0 / 3 | 2 / 3 | 2 / 3 |
| Drums in which leakage of the EPA-E composition did not occur | 0 / 2 | 0 / 2 | 0 / 2 |

As is clear from the results of Table 2, it could be understood that EPA-E composition leaked even from air-tightness inspection-passed products as determined by the helium leak test. Further, among the three drums in which coloration was examined by the PT inspection, EPA-E composition leakage occurred in one drum, even though it showed no coloration. Thus, the PT inspection was not sufficient to completely prevent the leakage of EPA-E composition.

When the burr inspection was performed on the drums from which EPA-E composition had leaked, it was found that two of the three had burr.

When the burr inspection was performed on the drums that did not leak, among the two drums, both were free of burr, confirming that they were burr inspection-passed products.

### (Limit Sample)

For the drums in which leakage of EPA-E composition occurred, the seam-welded portions of the drums dismantled in the PT inspection described above were cut out and used as limit samples. When drums were produced, drums having less burr were judged as burr inspection-passed products by visual comparison with this limit sample.

Furthermore, when this limit sample was measured, the burr size was 1.3 mm.

### DESCRIPTION OF REFERENCE SIGNS

- 10: body
- 10a: seam portion
- 11: top plate
- 12: bottom plate
- 100: packaging container

## Claims

1. An inspection method for a packaging container made of metal, the inspection method comprising:
forming and seam-welding a metal sheet to form a body, and then attaching a top plate and a bottom plate to the body to form a packaging container; and thereafter performing a burr inspection to inspect a degree of burr of the seam portion of the body.

2. The inspection method according to claim 1, wherein the degree of burr is based on a burr size.

3. The inspection method according to claim 1 or 2, wherein the burr inspection is visually performed.

4. The inspection method according to any one of claims 1 to 3, wherein the burr inspection is based on a limit sample.

5. A method for manufacturing a packaging container made of metal, the method comprising:
forming and seam-welding a metal sheet to form a body,
attaching a top plate and a bottom plate to the body to form a packaging container,
performing a burr inspection to inspect a degree of burr of the seam portion of the body of the packaging container, and
selecting the packaging container which has passed the burr inspection as a burr inspection-passed product.

6. The method according to claim 5, wherein the burr size of the burr inspection-passed product is 1.3 mm or less.

7. The method according to claim 5 or 6, comprising:
performing an air-tightness inspection with a gas on the packaging container,
selecting the packaging container which has passed the air-tightness inspection as an air-tightness inspection-passed product, and
performing the burr inspection on the air-tightness inspection-passed product.

8. The inspection method according to any one of claims 1 to 4 or the method according to any one of claims 5 to 7, wherein the packaging container is for storing a composition containing a highly unsaturated fatty acid alkyl ester as a main component.

9. A packaging container assembly, comprising:
100 or more packaging containers made of metal, wherein
a burr size of the seam portion of a body of each of 98% or more of the 100 or more packaging containers made of metal is 1.3 mm or less, and
the packaging containers are for storing a composition containing a highly unsaturated fatty acid alkyl ester as a main component.

10. The packaging container assembly according to claim 9, comprising:
200 or more of the packaging containers, wherein
the burr size of the seam portion of the body of each of 98% or more of the 200 or more packaging containers is 1.3 mm or less.

11. The packaging container assembly according to claim 9 or 10, wherein the packaging container assembly is composed of packaging containers that were manufactured consecutively.

12. A package assembly, comprising:
a packaging container assembly comprising 100 or more packaging containers made of metal, wherein
a burr size of the seam portion of a body of each of 98% or more of the 100 or more packaging containers is 1.3 mm or less, and
a composition containing a highly unsaturated fatty acid alkyl ester as a main component stored in each packaging container of the packaging container assembly.

13. The package assembly according to claim 12, comprising:
200 or more of the packaging containers, wherein
the burr size of the seam portion of the body of each of 98% or more of the 200 or more packaging containers is 1.3 mm or less.

14. The package assembly according to claim 12 or 13, wherein 98% or more of the packages constituting the package assembly are determined to be leak-free in a contents leakage inspection performed after two weeks or more have elapsed since storage of the composition.

15. The package assembly according to any one of claims 12 to 14, wherein the package assembly is composed of packages that were manufactured consecutively.

16. A method for manufacturing a package, comprising:
storing a composition containing a highly unsaturated fatty acid alkyl ester as a main component in the packaging container produced by the method according to any one of claims 5 to 8.

17. A method for manufacturing a package, comprising:
storing a composition containing a highly unsaturated fatty acid alkyl ester as a main component in the packaging container produced by the method according to any one of claims 5 to 8 to obtain a package for leakage inspection,
performing a leakage inspection of the package for leakage inspection after two weeks or more have elapsed since storage of the composition, and
selecting the package which has passed the leakage inspection as a leakage inspection-passed product.

18. A method for manufacturing a package, comprising:
forming and seam-welding a metal sheet to form a body,
attaching a top plate and a bottom plate to the body to form a packaging container,
storing a composition containing a highly unsaturated fatty acid alkyl ester as a main component in the packaging container to obtain a package for leakage inspection,
performing a leakage inspection of the package for leakage inspection after two weeks or more have elapsed since storage of the composition, and
selecting the package which has passed the leakage inspection as a leakage inspection-passed product.

19. A method for using an indicator for adjusting a method for manufacturing a packaging container for storing a composition containing a highly unsaturated fatty acid alkyl ester as a main component,
wherein the indicator comprises at least results of a burr inspection of the packaging container, and
wherein the burr inspection comprises inspecting a degree of burr of a seam portion of the body of the packaging container after attaching a top plate and a bottom plate to a body to form the packaging container.

20. A method for using an indicator for adjusting a method for manufacturing a package that stores a composition containing a highly unsaturated fatty acid alkyl ester as a main component,
wherein the indicator comprises at least results of a leakage inspection of the package, and
wherein the leakage inspection includes performing a leakage inspection of a package for leakage inspection after two weeks or more have elapsed since storage of the composition.

21. A pharmaceutical composition comprising, as an active ingredient, a composition containing a highly unsaturated fatty acid alkyl ester as a main component, the composition being contained in the package assembly according to any one of claims 12 to 15, or being contained in a package produced by the method according to any one of claims 16 to 18.

22. The pharmaceutical composition according to claim 21, which is an agent for the treatment or prevention of at least one disease selected from the group consisting of atherosclerosis, cerebral infarction, myocardial infarction, thrombosis, lifestyle-related diseases, allergy, inflammatory diseases, and cancer.
